# EUROPÄISCHE PATENTSCHRIFT

(11) **EP 2 939 879 B1**
(45) Veröffentlichungstag und Bekanntmachung des Hinweises auf die Patenterteilung: **14.09.2016**
(21) Anmeldenummer: 14166675.0
(22) Anmeldetag: 30.04.2014
(51) Int. Cl.: B60R 5/04

(54) **Ausziehbarer Ladeboden für ein Kraftfahrzeug**
Extendable loading platform for a motor vehicle
Plancher de chargement télescopique d'un véhicule automobile

(43) Veröffentlichungstag der Anmeldung: 04.11.2015
(73) Patentinhaber: Johann Borgers GmbH, 46397 Bocholt (DE)
(72) Erfinder: Licher, Klaus, 46397 Bocholt (DE); Nehling, Björn, 46397 Bocholt (DE); Ait Oulahyane, Youssef, 46397 Bocholt (DE)
(74) Vertreter: Viering, Jentschura & Partner mbB Patent- und Rechtsanwälte

(56) Entgegenhaltungen:
- DE-A1-102006 009 886
- DE-A1-102010 013 176
- FR-A1- 2 915 938
- US-A1- 2006 016 840

## Beschreibung

Die Erfindung richtet sich auf einen ausziehbaren Ladeboden eines Kraftfahrzeugs, insbesondere eines Personenkraftwagens (PKW).

Weiterhin richtet sich die Erfindung auf ein System zur höhenverstellbaren und ausziehbaren Anordnung eines Ladebodens im Laderaum eines Kraftfahrzeugs, insbesondere eines Personenkraftwagens (PKW).

Aus dem Stand der Technik sind eine Reihe von ausziehbaren Ladeböden bekannt.

So offenbart die DE 10 2006 009 886 A1 einen verschiebbaren Ladeboden, der auf in den Ladeboden eingelassenen oder auf einen Ladeboden aufgesetzten Führungsschienen mittels aus der Unterseite des verschiebbaren Ladebodens vorstehender Rollen in den Führungsschienen verfahrbar und ausziehbar gelagert ist. Eine andere, aus der DE 102 60 032 B4 bekannte Ausführungsform besteht aus einem dreiteiligen, teleskopartig auseinanderziehbaren und ineinander schiebbaren Ladeboden. Hierbei sind zumindest zwei Ladebodensegmente in seitlichen Führungsschienen verschiebbar gehalten. Eine Lösung, die ebenfalls ein teleskopartiges Ineinanderschieben von Ladebodensegmenten mit Hilfe von auf dem Ladeboden befestigten Schienen betrifft, ist in der DE 10 2010 063 819 A1 offenbart. Weiterhin offenbart die DE 103 33 354 A1 eine Lösung, bei welcher auf einem im Fahrzeug befindlichen Ladeboden Ladeschienen angeordnet und befestigt werden, in welchen an einem Schlittenelement ausgebildete Rollen verfahrbar sind, wobei die Schlittenelemente an gegenüber liegenden Längsseiten des ausziehbaren Ladebodens befestigt sind. Diesen aus dem Stand der Technik bekannten Ausführungsformen ist gemeinsam, dass hierzu auf einer Ladebodenfläche Führungsschienen oder ähnliches angeordnet sein müssen, in welchen der ausziehbare Ladeboden gehalten und verfahrbar gelagert ist.

Aus der DE 10 2010 013 176 A1 ist eine Ladebodeneinrichtung für den Laderaum eines Kraftwagens bekannt, die eine eine Vielzahl von Rollen umfassende Rollenelementanordnung umfasst, wobei die Rollenelemente der Rollenelementanordnung relativ zu dem Beladungsgegenstände tragenden Boden der Rollenelementanordnung höhenverstellbar ausgebildet ist. Auf den Rollenelementen lässt sich Ladegut so lange bewegen, bis die Rollenelemente relativ zur Bodenfläche abgesenkt werden.

Aus der FR 2 915 938 A1 ist ein zweiteilig ausgebildeter Ladeboden bekannt, auf welchem ein Teil des Ladebodens aus einer ersten Ladeposition in der Nähe der Rücksitzbank des Kraftfahrzeuges in eine zweite Position in der Nähe der Kofferraumöffnung bewegbar ist.

Ein System zur höhenverstellbaren und ausziehbaren Anordnung eines Ladebodens im Laderaum eines Kraftfahrzeuges offenbart die US 2006/0016840 A1. Dieses System umfasst zwei seitlich und gegenüberliegend im Kraftfahrzeug angeordnete Innenraumverkleidungselemente, welche zwei übereinander angeordnete schienenartige Elemente aufweisen, in welchen ein ausziehbarer Ladeboden mit seitlich hervorstehenden Rollen geführt ist. In der Mitte der übereinander angeordneten schienenartigen Elemente ist eine weitere Verbindungsschiene zwischen diesen schienenartigen Elementen ausgebildet. Die schienenartigen Elemente können in entsprechenden Ausnehmungen der Innenraumverkleidungselemente angeordnet sein. Mittels der Verbindungsschiene ist es möglich, den ausziehbaren Ladeboden von einer in den unteren schienenartigen Elementen geführte Position in eine in den oberen schienenartigen Elementen geführte Position zu verstellen.

Der Erfindung liegt die Aufgabe zugrunde, eine Lösung zu schaffen, die einen ausziehbaren Ladeboden mit eigener Führungsschiene bereitstellt.

Diese Aufgabe wird mit einem ausziehbaren Ladeboden gemäß Anspruch 1 und einem System zur höhenverstellbaren und ausziehbaren Anordnung eines Ladebodens gemäß Anspruch 14 gelöst. Vorteilhafte Weiterbildungen und zweckmäßige Ausgestaltungen der Erfindungsgegenstände sind Gegenstand der jeweiligen Unteransprüche.

Nach einem ersten Aspekt der Erfindung zeichnet sich der ausziehbare Ladeboden dadurch aus, dass zwei klammerartig ausgebildete Führungsschienen jeweils ein Schlittenelement umgreifen und umklammern, in welchem jeweils mindestens eine Rolle drehbar gelagert ist. Diese wird vorzugsweise von einer innenseitig an der jeweiligen Führungsschiene ausgebildeten profilierten Laufbahn erfasst und geführt gehalten. Damit ist das jeweilige Schlittenelement innerhalb der Führungsschiene verfahrbar. Da zudem das jeweilige Schlittenelement an einer Längsseite des Ladebodens ausgebildet und befestigt ist, sind somit der Ladeboden und das Schlittenelement relativ zu der Führungsschiene bewegbar, was bei entsprechender Lagerung der Führungsschiene ein Ausziehen des Ladebodens ermöglicht. Da die jeweilige Führungsschiene das zugeordnete Schlittenelement klammerartig unter Anlage an die Lauffläche der jeweils mindestens einen Rolle, vorzugsweise mittels der mindestens einen profilierten Laufbahn oder profilierten Laufschiene erfasst, wird die Führungsschiene gleichzeitig von dem Schlittenelement gehalten. Damit stellt dann der ausziehbare Ladeboden gleichzeitig seine eigene Führungsschiene zur Verfügung. Es muss nun keine separate Führungsschiene mehr im Laderaum ausgebildet und zur Verfügung gestellt werden. Es reicht aus, lediglich eine Auflagefläche innerhalb des Laderaumes bereitzustellen, auf welcher der ausziehbare Ladeboden zumindest mit Teilflächen seiner Führungsschienen aufgelegt werden kann. Diese Auflageflächen können auch Bestandteil der seitlichen Innenraumverkleidung des Kraftfahrzeugs im Bereich des Laderaumes sein. Insgesamt betrifft die Erfindung einen ausziehbaren Ladeboden eines Kraftfahrzeugs, insbesondere Personenkraftwagens, mit zwei klammerartig ausgebildeten Führungsschienen, die jeweils mit einer offenen Führungsschienenseite an einer von zwei sich in Querrichtung des Ladebodens einander gegenüberliegenden Längsseiten des Ladebodens anliegen, wobei die Führungsschienen jeweils klammerartig ein Schlittenelement umgreifen, das an der jeweiligen Längsseite des Ladebodens ausgebildet und innerhalb der jeweiligen Führungsschiene mittels mindestens einer Rolle geführt verfahrbar sowie zusammen mit dem Ladeboden relativ zur zugeordneten Führungsschiene bewegbar gelagert ist, wobei die Schlittenelemente jeweils mindestens eine Durchbrechung aufweisen, in welcher die mindestens eine Rolle mit Achse drehbar eingesetzt und gehalten ist.

Die Erfindung zeichnet sich nach einem zweiten Aspekt im Zusammenhang mit dem erfindungsgemäßen System dadurch aus, dass zusätzlich zu dem erfindungsgemäßen Ladeboden auch Innenraumverkleidungselemente der Seitenverkleidung des Kraftfahrzeuges bereitgestellt werden, die die Auflageflächen für die Auflage der Führungsschienen des ausziehbaren Ladebodens ausbilden. Gemäß Ausgestaltung der Erfindung kann hierdurch sogar auch noch eine Höhenverstellbarkeit des ausziehbaren Ladebodens ausgebildet werden. Daher betrifft die Erfindung auch ein System zur höhenverstellbaren und ausziehbaren Anordnung eines Ladebodens im Laderaum eines Kraftfahrzeugs, insbesondere Personenkraftwagens, das seitlich im Kraftfahrzeug angeordnete und in Längsrichtung des Kraftfahrzeugs längs des Laderaumes ausgerichtete und sich in Fahrzeugquerrichtung einander gegenüberliegend angeordnete Innenraumverkleidungselemente umfasst, die jeweils in Fahrzeuglängsrichtung zueinander beabstandete Auflagebereiche für einen vorderen und einen hinteren Endbereich einer Führungsschiene des Ladebodens aufweisen, und das einen Ladeboden umfasst, der zwei klammerartig ausgebildete Führungsschienen aufweist, die jeweils mit einer offenen Führungsschienenseite an einer von zwei sich in Querrichtung des Ladebodens einander gegenüberliegenden Längsseiten des Ladebodens anliegen, wobei die Führungsschienen jeweils klammerartig ein Schlittenelement umgreifen, das an der jeweiligen Längsseite des Ladebodens ausgebildet und innerhalb der jeweiligen Führungsschiene mittels mindestens einer Rolle geführt verfahrbar sowie zusammen mit dem Ladeboden relativ zur zugeordneten Führungsschiene bewegbar gelagert ist, wobei die Schlittenelemente jeweils mindestens eine Durchbrechung aufweisen, in welcher die mindestens eine Rolle mit Achse drehbar eingesetzt und gehalten ist und wobei der Ladeboden mit den Führungsschienen in seiner Dimensionierung derart einerseits an den Abstand der Innenraumverkleidungselemente zueinander und andererseits an den jeweiligen Abstand der Auflagebereiche eines Innenraumverkleidungselementes zueinander angepasst ist, dass die Führungsschienen auf den Auflagebereichen aufliegend ortsfest, insbesondere klemmend, zwischen diesen gehalten und die Schlittenelemente bei einer Ausziehbewegung des Ladebodens in Fahrzeuglängsrichtung in den Führungsschienen und relativ zu diesen bewegbar sind.

Sowohl der Ladeboden als auch das System zeichnen sich in Weiterbildung dadurch aus, dass die mindestens eine Rolle von mindestens einer innenseitig an der Führungsschiene ausgebildeten profilierten und die mindestens eine Rolle führenden Laufbahn oder Laufschiene erfasst ist.

In Ausgestaltung der Erfindung zeichnet sich der ausziehbare Ladeboden weiterhin dadurch aus, dass die Schlittenelemente integraler Bestandteil des Ladebodens sind, insbesondere einstückig mit diesem ausgebildet sind. Dies hat den Vorteil, dass hier keine separaten Schlittenelemente bereitgestellt werden und dann beispielsweise an den Ladeboden angeschraubt oder angeklebt werden müssen. Hier sind die Schlittenelemente in einem Fertigungsprozess zusammen mit dem Ladeboden, der als ein Formteil aus Kartonwabe/Glasfaser/Polyurethan (PU) ausgebildet sein kann, beim Formgebungsprozess gleich als integraler Bestandteil des Ladebodenformteils mit ausbildbar.

Um die mindestens eine Rolle problemlos drehbar in dem Schlittenelement lagern und anordnen zu können, zeichnet sich die Erfindung in Weiterbildung ferner dadurch aus, dass die mindestens eine Rolle mit Achse jeweils in einem in die Durchbrechung eingesetzten Aufnahmeelement angeordnet ist.

Kostengünstig lassen sich die Führungsschienen aus Kunststoff herstellen. Hierbei ist es dann zweckmäßig, die Führungsschienen als klappbares Kunststoffteil zu gestalten. Die Erfindung zeichnet sich daher weiterhin dadurch aus, dass jede Führungsschiene aus zwei über ein Filmscharnier aufeinander zu klappbar miteinander verbundenen Führungsschienenteilen besteht.

Von Vorteil ist es hierbei weiterhin, wenn die mindestens Rolle, die Achse und das Aufnahmeelement und/oder die Führungsschienen als Spritzgussteil ausgebildet sind, was die Erfindung ebenfalls vorsieht.

Um die Möglichkeit zu schaffen, dass bei einer Ausziehbewegung die Schlittenelemente nicht aus der jeweils zugeordneten Führungsschiene herausgezogen werden und um zu vermeiden, dass bei dem Ausziehen des Ladebodens aus seinen Führungsschienen die mindestens eine Rolle aus der jeweils zugeordneten Führungsschiene, innerhalb welcher diese geschützt angeordnet ist, in eine ungeschützte Lage außerhalb der Führungsschiene herausgezogen wird, ist gemäß Weiterbildung der Erfindung vorgesehen, dass das jeweilige Schlittenelement einen die mindestens eine Rolle, vorzugsweise drei Rollen, aufweisenden ersten Längsabschnitt und einen unter Ausbildung eines Versprungs oder einer Anschlagskante daran anschließenden zweiten Längsabschnitt mit einer gegenüber dem ersten Längsabschnitt geringeren Breite aufweist, der in der vollständigen Auszugsposition des Ladebodens an einen innenseitig an jeder Führungsschiene ausgebildeten Anschlag, insbesondere eine Querwand der Führungsschiene, anschlägt.

Um den Ladeboden mit den Schlittenelementen und die zugeordneten Führungsschienen in einer Nichtauszugsposition, in welcher die Führungsschienen vorzugsweise nahezu bündig mit den Seiten des Ladebodens abschließt, fixieren zu können, ist in den Schlittenelementen jeweils eine Verriegelungseinheit vorgesehen, die in dieser Verriegelungsposition in eine Verriegelungsausnehmung oder in einen Verriegelungsbereich der jeweils anliegenden Führungsschiene eingreift, so dass keine Relativbewegung zwischen Führungsschiene und Schlittenelement möglich ist. Diesbezüglich sieht die Erfindung vor, dass in jedem Schlittenelement, insbesondere jeweils in dem die mindesten eine Rolle aufweisenden ersten Längsabschnitt, eine Ausnehmung ausgebildet ist, in welche eine in ihrer Verriegelungsposition in eine Verriegelungsausnehmung oder einen Verriegelungsbereich der anliegenden Führungsschiene eingreifende Verriegelungseinheit eingesetzt ist.

Hierbei ist es dann weiterhin von Vorteil und zweckmäßig, die Verriegelungseinheit dadurch auszubilden, dass die Verriegelungseinheit einen federkraftbeaufschlagten Verriegelungsstift oder einen Verriegelungsabschnitt umfasst, der sich in der Verriegelungsposition der Verriegelungseinheit federkraftgetrieben in seine die zugeordnete Verriegelungsausnehmung oder den zugeordneten Verriegelungsbereich der anliegenden Führungsschiene erfassende Verriegelungsstellung bewegt, aus welcher er mittels eines an dem Verriegelungsstift oder dem Verriegelungsabschnitt kraftübertragend angreifenden, handbetätigbaren Bowdenzuges entgegen der Kraft einer Feder aus seiner Verriegelungsstellung herausziehbar ist, was die Erfindung in Ausgestaltung des Ladebodens weiterhin vorsieht.

Um die Führungsschienen auf Auflageflächen, die gegebenenfalls auch Anschlagselemente aufweisen oder die Bestandteil von Seitenverkleidungen des Kraftfahrzeugs sind, klemmend festlegen zu können, ist es weiterhin von Vorteil, wenn die Führungsschienen kopfseitig jeweils ein federkraftbeaufschlagtes Klemmspannelement aufweisen, wodurch sich die Erfindung ebenfalls auszeichnet.

Da es ein besonderer Vorteil des erfindungsgemäßen Ladebodens ist, dass dieser mit seinen Führungsschienen auf an den Fahrzeugseitenwänden angeordneten Innenraumverkleidungselementen aufliegen kann, zeichnet sich die Erfindung in vorteilhafter Weiterbildung auch dadurch aus, dass der Ladeboden mit den Führungsschienen auf seitlich im Kraftfahrzeug angeordneten sowie in Längsrichtung des Kraftfahrzeugs längs des Laderaumes ausgerichteten und sich in Fahrzeugquerrichtung einander gegenüberliegenden Innenraumverkleidungselementen, die jeweils in Fahrzeuglängsrichtung zueinander beabstandete Auflagebereiche für einen vorderen und einen hinteren Endbereich einer Führungsschiene des Ladebodens aufweisen, auflegbar ausgebildet und in seiner Dimensionierung derart einerseits an den Abstand der Innenraumverkleidungselemente zueinander und andererseits an den jeweiligen Abstand der Auflagebereiche eines Innenraumverkleidungselementes zueinander angepasst ist, dass die Führungsschienen auf den Auflagebereichen aufliegend ortsfest, insbesondere klemmend, zwischen diesen gehalten und die Schlittenelemente bei einer Ausziehbewegung des Ladebodens in Fahrzeuglängsrichtung in den Führungsschienen und relativ zu diesen bewegbar sind.

Hierbei können die Auflageflächen auch Bestandteil von Kulissenbahnen sein, die eine Höhenverstellung des gesamten Ladebodens ermöglichen. Die Erfindung sieht daher in weiterer Ausgestaltung vor, dass die Auflagebereiche der Innenraumverkleidungselemente Bestandteil von eine Höhenverstellung des Ladebodens ermöglichenden Kulissenbahnen und/oder Auflageflächen sind und der Ladeboden mit den Führungsschienen in seiner Dimensionierung derart angepasst ist, dass die Führungsschienen auf den Kulissenflächen und/oder Auflageflächen aufliegend ortsfest, insbesondere klemmend, zwischen diesen gehalten und die Schlittenelemente bei einer Ausziehbewegung des Ladebodens in Fahrzeuglängsrichtung in den Führungsschienen und relativ zu diesen bewegbar sind.

Um die Höhenverschwenkbarkeit des Ladebodens innerhalb des Laderaumes zu ermöglichen, sieht die Erfindung zudem in zweckmäßiger Ausgestaltung vor, dass der Ladeboden mit den Führungsschienen in seiner Dimensionierung derart an die Auflagebereiche und/oder die Kulissenflächen und/oder die Auflageflächen angepasst ist, dass er auf diesen ablegbar und lagerbar sowie unter Verschwenken des Ladebodens von diesen abhebbar und entfernbar ist.

In gleicher Weise wie der Ladeboden zeichnet sich das System in Ausgestaltung dadurch aus, dass die Auflagebereiche Bestandteil von eine Höhenverstellung des Ladebodens ermöglichenden Kulissenbahnen und/oder Auflageflächen sind und der Ladeboden mit den Führungsschienen in seiner Dimensionierung derart angepasst ist, dass die Führungsschienen auf den Kulissenflächen und/oder Auflageflächen aufliegend ortsfest, insbesondere klemmend, zwischen diesen gehalten und die Schlittenelemente bei einer Ausziehbewegung des Ladebodens in Fahrzeuglängsrichtung in den Führungsschienen und relativ zu diesen bewegbar sind. Hierbei ist es dann zudem auch möglich, dass der Ladeboden mit den Führungsschienen in seiner Dimensionierung derart an die Auflagebereiche und/oder die Kulissenflächen und/oder die Auflageflächen angepasst ist, dass er auf diesen ablegbar und lagerbar sowie unter Verschwenken des Ladebodens von diesen abhebbar und entfernbar ist, was die Erfindung ebenfalls vorsieht.

Schließlich zeichnet sich das System in Ausgestaltung auch dadurch aus, dass es einen ausziehbaren Ladeboden nach einen der Ansprüche 2 bis 13 umfasst.

Die Erfindung ist nachstehend anhand einer Zeichnung beispielhaft näher erläutert. Diese zeigt in:
- Fig. 1: in perspektivischer Darstellung eine Aufsicht auf einen erfindungsgemäßen Ladeboden,
- Fig. 2: in perspektivischer Darstellung eine Aufsicht auf einen erfindungsgemäßen Ladeboden bei entfernten Führungsschienen,
- Fig. 3: in perspektivischer Darstellung eine Aufsicht auf die Rückseite des Ladebodens nach Fig. 2,
- Fig. 4: in schematischer perspektivischer Darstellung eine Führungsschiene sowie ein Klemmspannelement,
- Fig. 5: in schematischer Darstellung eine Schnittansicht eines Teilbereiches eines erfindungsgemäßen Ladebodens,
- Fig. 6: eine Querschnittsdarstellung eines eine Rolle umfassenden Teilbereiches eines erfindungsgemäßen Ladebodens,
- Fig. 7 und 8: die Anordnung des erfindungsgemäßen Ladebodens zwischen zwei seitlichen Innenraumverkleidungsteilen in ausgezogener (Fig. 7) und nicht ausgezogener Position (Fig. 8) und in
- Fig. 9: eine schematische Darstellung einer Höhenverstellungsmöglichkeit für den erfindungsgemäßen Ladeboden.

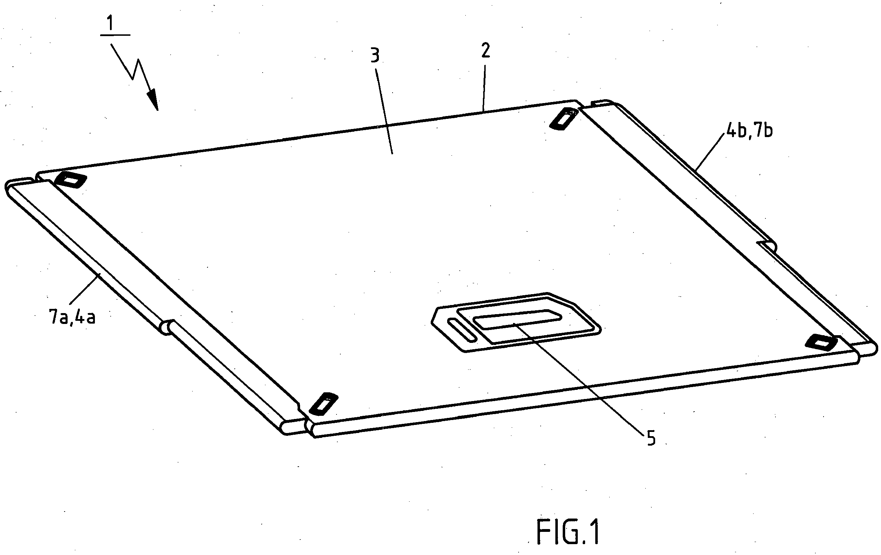

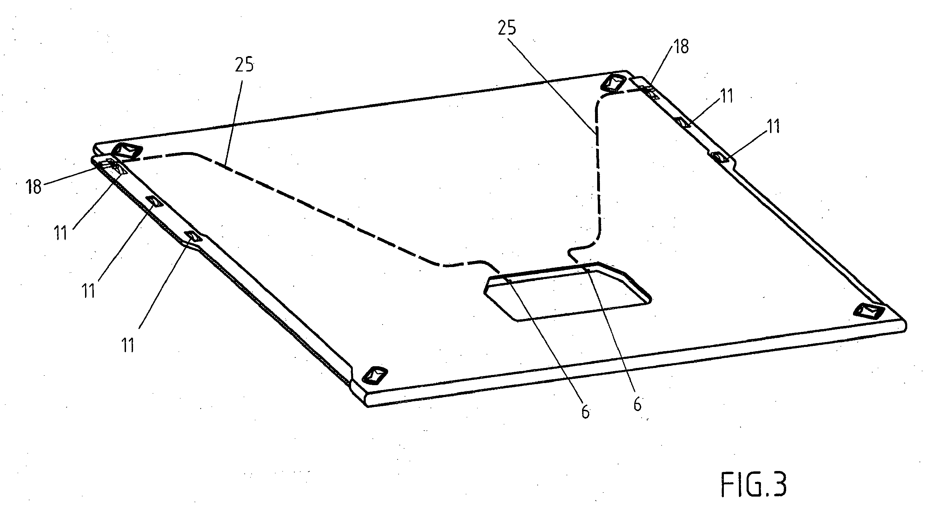

Die Fig. 1 zeigt die mit einer Flor- oder Dekorschicht 3 belegt Oberseite eines erfindungsgemäßen Ladebodens 1 mit seinen daran an seitlichen, sich gegenüberliegenden Längsseiten des Ladebodens 1 angeordneten Führungsschienen 4a, 4b, wobei die Führungsschiene 4a die in Fahrtrichtung eines mit dem Ladeboden 1 ausgestatteten Kraftfahrzeuges linke Führungsschiene und die Führungsschiene 4b korrespondierend dazu die rechte Führungsschiene ausbildet. Der Ladeboden 1 ist in Form eines Formteiles 2 ausgebildet, das in aus dem Stand der Technik bekannter Weise im Rahmen eines formgebenden Prozesses aus einer Kartonwabe, Glasfasern und Polyurethanschaum gebildet wird. Bei diesem formgebenden Herstellprozess kann auch gleichzeitig die oberseitige Flor- oder Dekorschicht 3 aufgebracht werden. In der Bodenfläche des Ladebodens 1 ist eine Öffnung mit einem eingesetzten Betätigungsgriff 5 eingelassen, der mit einem auf der Rückseite des Ladebodens 1 ausgebildeten und angeordneten Bowdenzug 6 (siehe Fig. 3) in kraftübertragender Wirkverbindung steht.

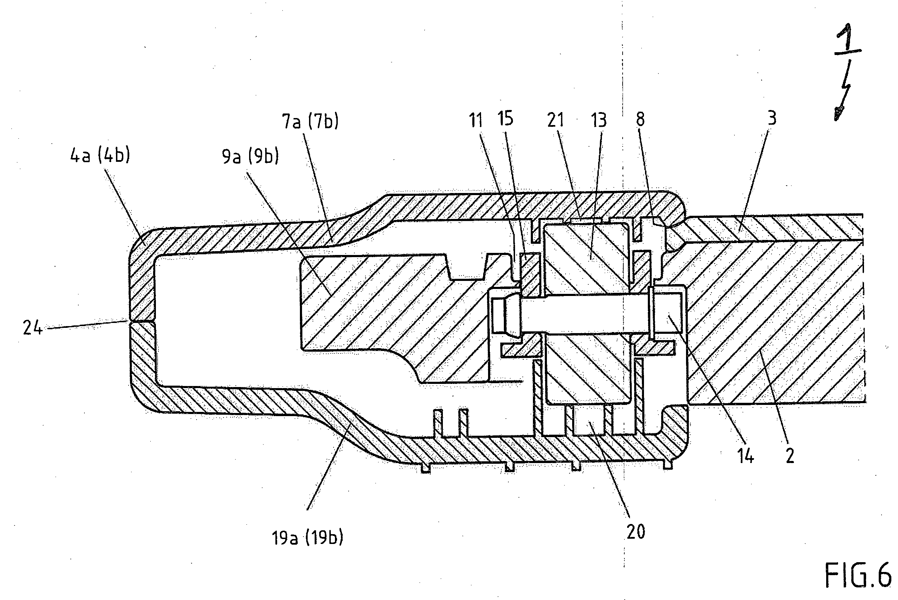

Die Führungsschienen 4a, 4b umgreifen jeweils die Endbereiche der zugeordneten Längsseiten des Ladebodens 1 und liegen dabei vorzugsweise mit ihrem jeweiligen oberen Führungsschienenteil 7a, 7b an in der Oberfläche des Ladebodens 1 ausgebildeten Führungskulissen 8 (Fig. 6) derart an, dass eine Relativverschiebung zwischen dem Ladeboden 1 und den Führungsschienen 4a, 4b möglich bleibt.

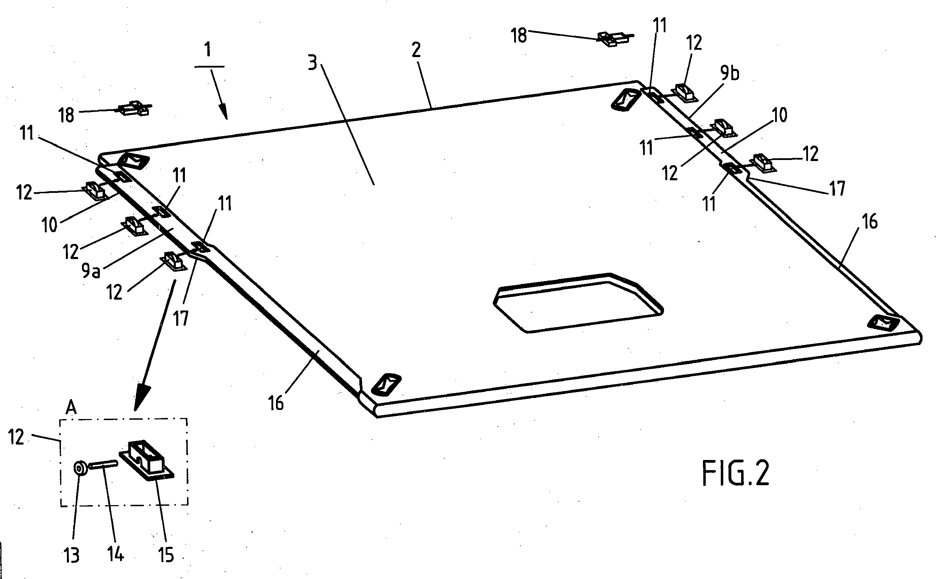

Die von den Führungsschiene 4a, 4b umgriffenen Endbereiche des Formteiles 2 sind als Schlittenelemente 9a, 9b ausgebildet und einteilig an das Formteil 2 angeformt. Die Schlittenelemente 9a, 9b sind in der Fig. 2 näher dargestellt, welche den Ladeboden 1 bei entfernten Führungsschienen 4a, 4b zeigt. Auch hier ist mit dem Bezugszeichen 9a das in Fahrtrichtung des Fahrzeuges linke Schlittenelement und mit dem Bezugszeichen 9b das in Fahrzeugrichtung rechte Schlittenelement bezeichnet. Beide Schlittenelement 9a, 9b sind identisch aufgebaut und bestehen aus einem ersten Längsabschnitt 10, in welchem jeweils drei durchgehende Durchbrechungen 11 ausgebildet sind, in welche jeweils ein Laufrollensystem 12 eingesetzt ist. Wie dem Teilbild A in der Fig. 2 zu entnehmen ist, besteht ein solches Laufrollensystem 12 aus einer Rolle 13, ihrer Achse 14 und einem die Rolle 13 mit der Achse 14 aufnehmenden Aufnahmeelement 15, in welchem die Rolle 13 drehbar lagerbar ist. Wie der Fig. 6 zu entnehmen ist, ist die Achse 14 in Öffnungen des Aufnahmeelementes 15 gelagert und mit Hilfe von radialen Vorsprüngen gegen ein Herausbewegen aus dem Aufnahmeelement 15 geschützt. Die Rollen 13 sind in den Durchbrechungen 11 bzw. den Aufnahmeelementen 15 drehbar gelagert und ragen mit ihrer außenseitigen Lauffläche über die Oberfläche des jeweiligen Schlittenelementes 9a, 9b in diesem Bereich des jeweiligen ersten Längsabschnittes 10 heraus. An den ersten Längsabschnitt 10 schließt sich in Richtung auf die Fahrzeugrückseite ein zweiter Längsabschnitt 16 des jeweiligen Schlittenelementes 9a, 9b an. Dieser zweite Längsabschnitt 16 weist keine Rollen auf und ist in seiner Breitenerstreckung in Querrichtung des Ladebodens 1 schmaler ausgebildet als der erste Längsabschnitt 10, so dass im Übergang vom ersten Längsabschnitt 10 zum zweiten Längsabschnitt 16 ein Versprung 17 ausgebildet ist. In der vollständigen Auszugsposition des Ladebodens 1 schlägt dieser Versprung 17 an eine innenseitig in den jeweiligen Führungsschienen 4a, 4b ausgebildete Anschlagsfläche, bei welcher es sich um eine Querwand der Führungsschienen 4a, 4b handeln kann, an.

Weiterhin ist im Bereich eines jeden Schlittenelementes 9a, 9b eine weitere Ausnehmung ausgebildet, in welche eine Verriegelungseinheit 18 eingesetzt ist, deren Funktion nachstehend noch näher erläutert wird.

Wie insbesondere aus der Fig. 6 ersichtlich ist, liegen die Führungsschienen 4a, 4b mit einer offenen Führungsschienenseite an dem Ladeboden 1 an und umgreifen dabei jeweils das zugeordnete Schlittenelement klammerartig, so dass dieses innerhalb der jeweiligen Führungsschiene 4a, 4b mittels mindestens einer Rolle 13, im Ausführungsbeispiel mittels dreier Rollen 13, innerhalb der Führungsschienen 4a, 4b geführt verfahrbar sowie zusammen mit dem Ladeboden 1 relativ zur zugeordneten Führungsschiene 4a, 4b bewegbar gelagert ist. Hierbei verhindert einerseits eine klemmende Halterung der Aufnahmeelemente 15 in der jeweiligen Durchbrechung 11, aber auch die Umklammerung, dass die Rollen 13 sich aus den Durchbrechungen 11 heraus bewegen. Zudem ist innenseitig in jeder der jeweiligen Führungsschiene 4a, 4b auf der Innenseite eines unteren Führungsschienenteiles 19a oder 19b eine profilierte, die Lauffläche der Rollen 13 führende Laufbahn 20 ausgebildet, auf welcher die Laufflächen der Rollen 13 abrollen. Auf der Innenseite jedes oberen Führungsschienenteils 7a, 7b ist ebenfalls ein profilierter Laufbereich 21 ausgebildet, An diesem Laufbereich 21 liegt die Lauffläche der jeweiligen Rolle 13 aber nicht an, sondern hält einen Abstand. Allerdings weist dieser Laufbereich 21 Profilierungen auf, die seitliche Führungen für die Rollen 13 ausbilden. Das Aufnahmeelement 15 ist vorzugsweise klemmend in der jeweiligen Durchbrechung 11 gehalten.

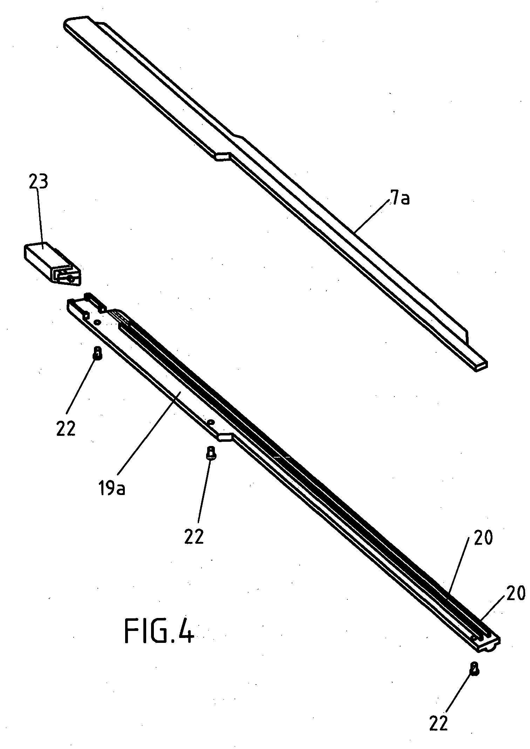

Die Fig. 4 zeigt ein oberes Führungsschienenteil 7a und ein unteres Führungsschienenteil 19a in ihrem nicht zusammengebauten Zustand. In dem unteren Führungsschienenteil 19a ist die längs des ersten Längsabschnittes 10 und des zweiten Längsabschnittes 16 verlaufende profilierte Laufbahn 20 zu erkennen, in welcher die Rollen 13 verfahrbar gelagert sind. Zusammengehalten werden das untere Führungsschienenteil 19a und das oberen Führungsschienenteil 7a mittels Schraubverbindungen 22. Kopfseitig ist an der Führungsschiene 4a - und in analoger Weise auch an der Führungsschiene 4b - ein Klemmspannelement 23 in einem Aufnahmebereich der jeweiligen Führungsschiene 4a, 4b, insbesondere einem in den jeweiligen unteren Führungsschienenteil 19a, 19b ausgebildeten Aufnahmebereich, angeordnet. Dieses federkraftbeaufschlagte Klemmspannelement 23 steht mit einem durch die Feder vorgespannten Klemmstück aus dem Endbereich der jeweiligen Führungsschiene 4a, 4b hervor, so dass die jeweilige Führungsschiene hierdurch federbelastet an eine am Klemmstück anliegende Anschlagsfläche bei einem entsprechenden, Widerlager auf der entgegenliegenden Seite der Führungsschiene 4a, 4b damit ortsfest federgespannt festlegbar ist.

Die Führungsschiene 4a, 4b sind ebenso wie die Rollen 13, die Achsen 14 und die Aufnahmeelemente 15 als Spritzgussteil aus Kunststoff hergestellt. Hierbei sind die Führungsschienen 4a, 4b zudem einteilig hergestellt, wobei das jeweilige obere Führungsschienenteil 7a, 7b mit dem jeweiligen unteren Führungsschienenteil 19a, 19b über ein Filmscharnier 24 verbunden ist.

Die Fig. 3 zeigt die Unterseite des Ladebodens 1, in welcher Rillen 25 ausgebildet sind, in welchen jeweils ein Strang des Bowdenzuges 6 von dem Griff 5 zu der jeweiligen Verriegelungseinheit 18 führt, die mittels dieses Bowdenzuges 6 aus einer federgespannten Verriegelungsposition mit der jeweils zugeordneten Führungsschiene 4a, 4b in eine Entriegelungsposition gezogen werden können, in welcher dann eine Relativbewegung zwischen der jeweiligen Führungsschiene 4a, 4b und dem jeweiligen Schlittenelement 9a, 9b möglich ist.

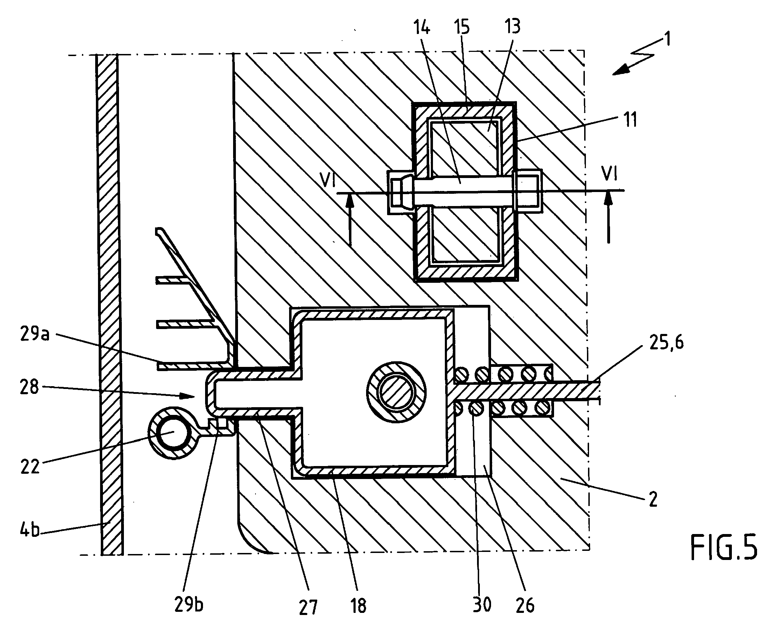

Die Fig. 5 zeigt einen Längsschnitt durch einen Eckbereich des Ladebodens 1, in welchem in einer Durchbrechung 11 eine Rolle 13 mit Achse 14 und Aufnahmeelement 15 sowie in einer Ausnehmung 26 eine federkraftbeaufschlagte Verriegelungseinheit 18 angeordnet sind. Die Verriegelungseinheit 18 befindet sich in ihrer Verriegelungsposition, in welcher sie mit einem Verriegelungsstift 27 in einen Verriegelungsbereich 28 der Führungsschiene 4b eingreift. Der Verriegelungsbereich 28 weist zwei quer zur Auszugsrichtung des Ladebodens 1 innerhalb der Führungsschiene 4b in deren unteren Führungsschienenteil 19b ausgebildete Sperrwände 29a, 29b auf. Aus dieser Verriegelungsposition ist die Verriegelungseinheit 18 gegen die Kraft einer die Verriegelungseinheit in ihre Verriegelungsposition drückenden Feder 30 in eine Entriegelungsposition bewegbar, in welcher der Verriegelungsstift 27 nicht mehr zwischen den Querwänden 29a und 29b angeordnet ist. Dieses Zurückziehen des Verriegelungsstiftes 27 erfolgt durch Betätigung des Bowdenzuges 6. Sobald der handbetätigbare Bowdenzug 26 nicht betätigt wird, treibt die Feder 30 den Verriegelungsstift 27 in seine in der Fig. 5 dargestellte Verriegelungsstellung, die gleichzeitig die Verriegelungsposition der Verriegelungseinheit 18 darstellt. Die Fig. 6 stellt einen Schnitt längs der Linie A-A der Fig. 5 dar.

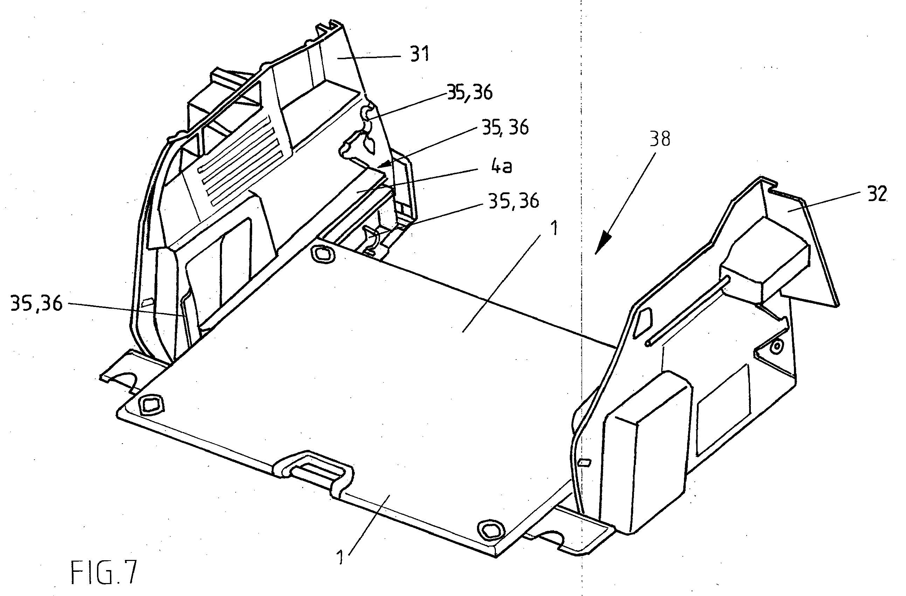

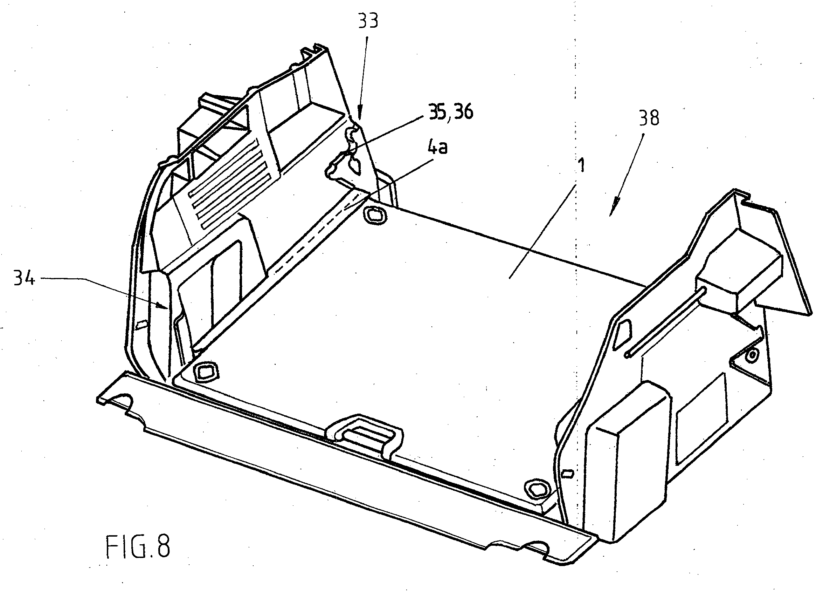

Die Fig. 7 und 8 zeigen die Anordnung des Ladebodens 1 an Innenraumverkleidungselementen 31, 32 eines Kraftfahrzeuges. Die Innenraumverkleidungselemente 31, 32 sind seitlich längs des Laderaumes mit Längsausrichtung parallel zur Fahrzeuglängsachse an Karosserieelementen befestigt bzw. befestigbar. Die Innenraumverkleidungselementen 31, 32 sind weiterhin sich in Querrichtung des Fahrzeuges gegenüber liegend angeordnet und weisen jeweils Auflagebereiche 33, 34 auf, auf denen oder an denen jeweils eine Führungsschiene 4a, 4b des Ladebodens 1 auflegbar ist. Die Auflagebereiche 33, 34 sind in Fahrzeuglängsrichtung zueinander beabstandet ausgebildet und weisen in verschiedenen Höhenstufen Kulissenflächen 35 und/oder Auflagefläche 36 auf, auf welchen die jeweilige Führungsschiene 4a, 4b auflegbar ist. Die Auflagebereiche 33, 34 sind in den beiden Innenraumverbindungselementen 31, 32 im Ausführungsbeispiel identisch aufgebaut.

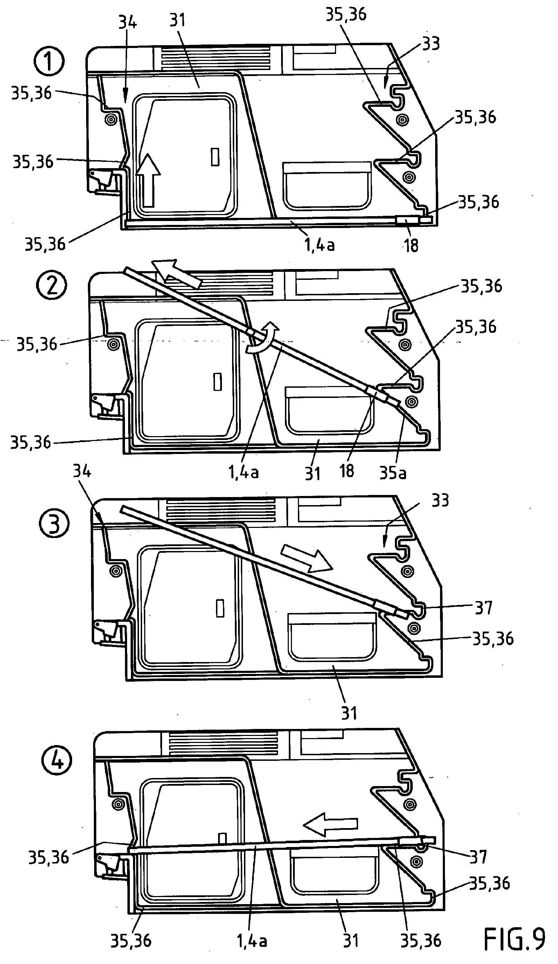

Der Ladeboden 1 ist nun in seiner Dimensionierung derart einerseits an den Abstand der Innenverkleidungselemente 31, 32 zueinander und andererseits an den jeweiligen Abstand der Auflagebereiche 33, 34 zueinander angepasst, dass die Führungsschienen 4a, 4b auf den Auflagebereichen 33, 34 aufliegend ortsfest und mittels des Klemmspannelementes 23 auch klemmend zwischen diesen gehalten und die Schlittenelemente 9a, 9b bei einer Ausziehbewegung des Ladebodens 1 in Fahrzeuglängsrichtung in den Führungsschienen 4a, 4b relativ zu diesen bewegbar sind. Hierbei sind die Auflagebereiche 33, 34 im Ausführungsbeispiel in Form von mehrstufig übereinander angeordneten Kulissenflächen 35 und/oder Auflageflächen 36 ausgebildet, die Bestandteil der Auflagebereiche 33, 34 sind, wodurch eine Höhenverstellungsmöglichkeit für den Ladeboden 1 geschaffen wird. Die Dimensionierung des Ladebodens 1 und insbesondere der Führungsschienen 4a, 4b ist demnach auch daran angepasst, dass die Führungsschienen 4a, 4b in allen ausgebildeten Höhenpositionen der Kulissenflächen 35 und der Auflageflächen 36 auflegbar positioniert werden können und der Ladeboden 1 dann unter der Spannkraft des Spannklemmelementes 23 in dieser Position ortsfest klemmend gehalten ist. Hierbei ist der Ladeboden 1 mit seinen Führungsschienen 4a, 4b zudem in seiner Positionierung derart an die Auflagebereiche 33, 34 und die Kulissenflächen 35 und die Auflageflächen 36 angepasst, dass er auf diesen ablegbar und lagerbar sowie unter Verschwenken des Ladebodens 1 von diesen abhebbar und entfernbar ist. Hierdurch ist eine Höhenverstellung des Ladebodens 1 innerhalb des Laderaumes 38 möglich, wie dies in der Fig. 9 schematisch dargestellt ist. Ausgehend von der Position 1, in welcher sich der Ladeboden 1 in seiner niedrigsten Höhenposition auf unteren Auflageflächen 36 aufliegend befindet, wird er am fahrzeugrückseitigen Ende in Richtung des in der Position 1 dargestellten Pfeiles nach oben angehoben und in die in der Position 2 ersichtliche Schrägstellung verschwenkt. Aus dieser Schrägstellung wird er nun weiter in Richtung des geraden Pfeiles in Richtung der Fahrzeugrückseite gezogen, so dass er außer Kontakt mit der Kulissenfläche 35a gelangt. Daraufhin wird der Ladeboden 1 um den in der Position 2 angezeigten Drehpunkt verschwenkt und mit seinem vorderen, der Fahrzeugvorderseite zugewandten Endbereich auf die nächst höhere Kulissenfläche 35 oder Auflagefläche 36 aufgelegt und in Richtung des in der Position 3 gezeigten Pfeiles bis in eine mögliche Endlage verschoben, in welcher das endseitige Klemmspannelement 23 an eine Begrenzungswand 37 oder einen Anschlag der Kulissenfläche 35 anschlägt. Hierbei wird dann das Klemmspannelement 23 gegen die Kraft seiner Spannfeder zusammengedrückt und wird das fahrzeugrückwärtige, hintere Ende der Führungsschiene 4a des Ladebodens 1 auf die korrespondierende Auflagefläche 36 im Auflagebereich 34 aufgelegt. Daraufhin entspannt sich die Feder des Klemmspannelementes 23 ein wenig, presst das Klemmstück der Klemmspannelements 23 aber weiterhin gegen den Anschlag 37, so dass der Ladeboden 1 in dieser Position dann ortsfest klemmend auf der Auflagefläche 36 und/oder Kulissenflächen 35 aufliegend an dem Seitenteil 31 und in nicht dargestellter Weise korrespondierend mit der Führungsschiene 4b an dem gegenüber liegenden Innenraumverkleidungselement 32 festgelegt ist. In dieser festgelegten Position ist es aber möglich, den Ladeboden auszuziehen und wieder einzuschieben, wie dies den Fig. 7 und 8 zu entnehmen ist. Während zur Durchführung der Höhenverstellung, wie sie im Zusammenhang mit der Fig. 9 erläutert ist, sich die Verriegelungseinheit 18 in ihrer Verriegelungsstellung befindet, so dass eine Relativverschiebung zwischen den jeweiligen Führungsschienen 4a, 4b und den zugeordneten Schlittenelementen 9a, 9b nicht möglich ist, wird diese Verriegelungsposition durch Betätigung des Bowdenzuges 6 gelöst, wenn eine Ausziehbewegung des Ladebodens 1 gewünscht ist, bei welcher sich dann die Schlittenelemente 9a, 9b und der Ladeboden 1 relativ zu den Führungsschienen 4a, 4b bewegen.

Der vorstehend beschriebene ausziehbare Ladeboden 1 sowie das den Ladeboden 1 sowie die Innenraumverkleidungselemente 31, 32 umfassende System zur höhenverstellbaren und ausziehbaren Anordnung eines Ladebodens in einem Laderaum 38 eines Kraftfahrzeugs, findet insbesondere bei Personenkraftwagen (PKW) und hier insbesondere Kombis, Vans oder SUVs Anwendung.

Auch wenn beim Ausführungsbeispiel die Führungsschienen 4a, 4b aus Kunststoff bestehen, liegt es auch im Rahmen der Erfindung diese aus Metall, beispielsweise Aluminium, auszubilden. Insbesondere wenn besondere, d. h. erhöhte, Anforderungen an die vom Ladeboden 1 zu tragende Zuladung gestellt werden, können diese als Metall- oder Aluminiumprofile ausgebildet sein.

## Patentansprüche

1. Ausziehbarer Ladeboden (1) eines Kraftfahrzeugs, insbesondere Personenkraftwagens,
mit zwei klammerartig ausgebildeten Führungsschienen (4a, 4b), die jeweils mit einer offenen Führungsschienenseite an einer von zwei sich in Querrichtung des Ladebodens (1) einander gegenüberliegenden Längsseiten des Ladebodens (1) anliegen,
wobei die Führungsschienen (4a, 4b) jeweils klammerartig ein Schlittenelement (9a, 9b) umgreifen, das an der jeweiligen Längsseite des Ladebodens (1) ausgebildet und innerhalb der jeweiligen Führungsschiene (4a, 4b) mittels mindestens einer Rolle (13) geführt verfahrbar sowie zusammen mit dem Ladeboden (1) relativ zur zugeordneten Führungsschiene (4a, 4b) bewegbar gelagert ist,
wobei die Schlittenelemente (9a, 9b) jeweils mindestens eine Durchbrechung (11) aufweisen, in welcher die mindestens eine Rolle (13) mit Achse (14) drehbar eingesetzt und gehalten ist.

2. Ladeboden nach Anspruch 1, **dadurch gekennzeichnet, dass** die mindestens eine Rolle (13) von mindestens einer innenseitig an der Führungsschiene (4a, 4b) ausgebildeten profilierten und die mindestens eine Rolle (13) führenden Laufbahn (20) oder Laufschiene erfasst ist.

3. Ladeboden nach Anspruch 1 oder 2, **dadurch gekennzeichnet, dass** die Schlittenelemente (9a, 9b) integraler Bestandteil des Ladebodens (1) sind, insbesondere einstückig mit diesem ausgebildet sind.

4. Ladeboden nach einem der Ansprüche 1 bis 3, **dadurch gekennzeichnet; dass** die mindestens eine Rolle (13) mit Achse (14) jeweils in einem in die Durchbrechung (11) eingesetzten Aufnahmeelement (15) angeordnet ist.

5. Ladeboden nach einem der vorhergehenden Ansprüche, **dadurch gekennzeichnet, dass** jede Führungsschiene (4a, 4b) aus zwei über ein Filmscharnier (24) aufeinander zu klappbar miteinander verbundenen Führungsschienenteilen (7a, 19a; 7b, 19b) besteht.

6. Ladeboden nach Anspruch 4 oder 5, **dadurch gekennzeichnet, dass** die mindestens Rolle (13), die Achse (14) und das Aufnahmeelement (15) und/oder die Führungsschienen (4a, 4b) als Spritzgussteil ausgebildet sind.

7. Ladeboden nach einem der vorhergehenden Ansprüche, **dadurch gekennzeichnet, dass** das jeweilige Schlittenelement (9a, 9b) einen die mindestens eine Rolle (13), vorzugsweise drei Rollen (13), aufweisenden ersten Längsabschnitt (10) und einen unter Ausbildung eines Versprungs (17) oder einer Anschlagskante daran anschließenden zweiten Längsabschnitt (16) mit einer gegenüber dem ersten Längsabschnitt (10) geringeren Breite aufweist, der in der vollständigen Auszugsposition des Ladebodens (1) an einen innenseitig an jeder Führungsschiene (4a, 4b) ausgebildeten Anschlag, insbesondere eine Querwand der Führungsschiene (4a, 4b), anschlägt.

8. Ladeboden nach einem der vorhergehenden Ansprüche, **dadurch gekennzeichnet, dass** in jedem Schlittenelement (9a, 9b), insbesondere jeweils in dem die mindesten eine Rolle (13) aufweisenden ersten Längsabschnitt (10), eine Ausnehmung (26) ausgebildet ist, in welche eine in ihrer Verriegelungsposition in eine Verriegelungsausnehmung oder einen Verriegelungsbereich (28) der anliegenden Führungsschiene (4a, 4b) eingreifende Verriegelungseinheit (18) eingesetzt ist.

9. Ladeboden nach Anspruch 8, **dadurch gekennzeichnet, dass** die Verriegelungseinheit (18) einen federkraftbeaufschlagten Verriegelungsstift (27) oder einen Verriegelungsabschnitt umfasst, der sich in der Verriegelungsposition der Verriegelungseinheit (18) federkraftgetrieben in seine die zugeordnete Verriegelungsausnehmung oder den zugeordneten Verriegelungsbereich (28) der anliegenden Führungsschiene (4a, 4b) erfassende Verriegelungsstellung bewegt, aus welcher er mittels eines an dem Verriegelungsstift (27) oder dem Verriegelungsabschnitt kraftübertragend angreifenden, handbetätigbaren Bowdenzuges (6, 25) entgegen der Kraft einer Feder (30) aus seiner Verriegelungsstellung herausziehbar ist.

10. Ladeboden nach einem der vorhergehenden Ansprüche, **dadurch gekennzeichnet, dass** die Führungsschienen (4a, 4b) kopfseitig jeweils ein federkraftbeaufschlagtes Klemmspannelement (23) aufweisen.

11. Ladeboden nach einem der vorhergehenden Ansprüche, **dadurch gekennzeichnet, dass** der Ladeboden (1) mit den Führungsschienen (4a, 4b) auf seitlich im Kraftfahrzeug angeordneten sowie in Längsrichtung des Kraftfahrzeugs längs des Laderaumes (38) ausgerichteten und sich in Fahrzeugquerrichtung einander gegenüberliegenden Innenraumverkleidungselementen (31, 32), die jeweils in Fahrzeuglängsrichtung zueinander beabstandete Auflagebereiche (33, 34) für einen vorderen und einen hinteren Endbereich einer Führungsschiene (4a, 4b) des Ladebodens (1) aufweisen, auflegbar ausgebildet und in seiner Dimensionierung derart einerseits an den Abstand der Innenraumverkleidungselemente (31, 32) zueinander und andererseits an den jeweiligen Abstand der Auflagebereiche (33, 34) eines Innenraumverkleidungselementes (31, 32) zueinander angepasst ist, dass die Führungsschienen (4a, 4b) auf den Auflagebereichen (33, 34) aufliegend ortsfest, insbesondere klemmend, zwischen diesen gehalten und die Schlittenelemente (9a, 9b) bei einer Ausziehbewegung des Ladebodens (1) in Fahrzeuglängsrichtung in den Führungsschienen (4a, 4b) und relativ zu diesen bewegbar sind.

12. Ladeboden nach Anspruch 10, **dadurch gekennzeichnet, dass** die Auflagebereiche (33, 34) der Innenraumverkleidungselemente (31, 32) Bestandteil von eine Höhenverstellung des Ladebodens (1) ermöglichenden Kulissenbahnen (35) und/oder Auflageflächen (36) sind und der Ladeboden (1) mit den Führungsschienen (4a, 4b) in seiner Dimensionierung derart angepasst ist, dass die Führungsschienen (4a, 4b) auf den Kulissenflächen (35) und/oder Auflageflächen (36) aufliegend ortsfest, insbesondere klemmend, zwischen diesen gehalten und die Schlittenelemente (9a, 9b) bei einer Ausziehbewegung des Ladebodens (1) in Fahrzeuglängsrichtung in den Führungsschienen (4a, 4b) und relativ zu diesen bewegbar sind.

13. Ladeboden nach Anspruch 10 oder 11, **dadurch gekennzeichnet, dass** der Ladeboden (1) mit den Führungsschienen (4a, 4b) in seiner Dimensionierung derart an die Auflagebereiche (33, 34) und/oder die Kulissenflächen (35) und/oder die Auflageflächen (36) angepasst ist, dass er auf diesen ablegbar und lagerbar sowie unter Verschwenken des Ladebodens (1) von diesen abhebbar und entfernbar ist.

14. System zur höhenverstellbaren und ausziehbaren Anordnung eines Ladebodens (1) im Laderaum (38) eines Kraftfahrzeugs, insbesondere Personenkraftwagens,
das seitlich im Kraftfahrzeug angeordnete und in Längsrichtung des Kraftfahrzeugs längs des Laderaumes (38) ausgerichtete und sich in Fahrzeugquerrichtung einander gegenüberliegend angeordnete Innenraumverkleidungselemente (31, 32) umfasst, die jeweils in Fahrzeuglängsrichtung zueinander beabstandete Auflagebereiche (33, 34) für einen vorderen und einen hinteren Endbereich einer Führungsschiene (4a, 4b) des Ladebodens (1) aufweisen,
und das einen Ladeboden (1) umfasst, der zwei klammerartig ausgebildete Führungsschienen (4a, 4b) aufweist, die jeweils mit einer offenen Führungsschienenseite an einer von zwei sich in Querrichtung des Ladebodens (1) einander gegenüberliegenden Längsseiten des Ladebodens (1) anliegen,
wobei die Führungsschienen (4a, 4b) jeweils klammerartig ein Schlittenelement (9a, 9b) umgreifen, das an der jeweiligen Längsseite des Ladebodens (1) ausgebildet und innerhalb der jeweiligen Führungsschiene (4a, 4b) mittels mindestens einer Rolle (13) geführt verfahrbar sowie zusammen mit dem Ladeboden (1) relativ zur zugeordneten Führungsschiene (4a, 4b) bewegbar gelagert ist,
wobei die Schlittenelemente (9a, 9b) jeweils mindestens eine Durchbrechung (11) aufweisen, in welcher die mindestens eine Rolle (13) mit Achse (14) drehbar eingesetzt und gehalten ist
und wobei der Ladeboden (1) mit den Führungsschienen (4a, 4b) in seiner Dimensionierung derart einerseits an den Abstand der Innenraumverkleidungselemente (31, 32) zueinander und andererseits an den jeweiligen Abstand der Auflagebereiche (33, 34) eines Innenraumverkleidungselementes (31, 32) zueinander angepasst ist, dass die Führungsschienen (4a, 4b) auf den Auflagebereichen (33, 34) aufliegend ortsfest, insbesondere klemmend, zwischen diesen gehalten und die Schlittenelemente (9a, 9b) bei einer Ausziehbewegung des Ladebodens (1) in Fahrzeuglängsrichtung in den Führungsschienen (4a, 4b) und relativ zu diesen bewegbar sind.

15. System nach Anspruch 14, **dadurch gekennzeichnet, dass** die mindestens eine Rolle (13) von mindestens einer innenseitig an der Führungsschiene (4a, 4b) ausgebildeten profilierten und die mindestens eine Rolle (13) führenden Laufbahn (20) oder Laufschiene erfasst ist,

16. System nach Anspruch 14 oder 15, **dadurch gekennzeichnet, dass** die Auflagebereiche (33, 34) Bestandteil von eine Höhenverstellung des Ladebodens (1) ermöglichenden Kulissenbahnen (35) und/oder Auflageflächen (36) sind und der Ladeboden (1) mit den Führungsschienen (4a, 4b) in seiner Dimensionierung derart angepasst ist, dass die Führungsschienen (4a, 4b) auf den Kulissenflächen (35) und/oder Auflageflächen (36) aufliegend ortsfest, insbesondere klemmend, zwischen diesen gehalten und die Schlitterielemente (9a, 9b) bei einer Ausziehbewegung des Ladebodens (1) in Fahrzeuglängsrichtung in den Führungsschienen (4a, 4b) und relativ zu diesen bewegbar sind.

17. System nach einem der Ansprüche 14 oder 16, **dadurch gekennzeichnet, dass** der Ladeboden (1) mit den Führungsschienen (4a, 4b) in seiner Dimensionierung derart an die Auflagebereiche (33, 34) und/oder die Kulissenflächen (35) und/oder die Auflageflächen (36) angepasst ist, dass er auf diesen ablegbar und lagerbar sowie unter Verschwenken des Ladebodens (1) von diesen abhebbar und entfernbar ist.

18. System nach einem der Ansprüche 14 bis 17, **dadurch gekennzeichnet, dass** es einen ausziehbaren Ladeboden (1) nach einem der Ansprüche 2 bis 13 umfasst.

## Claims

1. An extendable loading floor (1) of a motor vehicle, in particular a passenger vehicle, with two guide rails designed as clamps (4a, 4b), which each abut one out of two longitudinal sides of the loading floor (1) located opposite one another in the transverse direction of the loading floor (1) with an open guide rail end,
wherein the guide rails (4a, 4b) each encompass a sliding element (9a, 9b) that is formed at the respective longitudinal side of the loading floor (1) in a clamp-like manner, and can be moved within the respective guide rail (4a, 4b) by means of at least one roller (13), as well as being movably supported together with the loading floor (1), relative to the guide rail allocated (4a, 4b),
wherein the sliding elements (9a, 9b) each have at least one through-hole (11), into which said at least one roller (13) is rotatably inserted with an axis (14), in which it is held.

2. The loading floor in accordance with Claim 1, **characterised in that** said at least one roller (13) is covered by at least one profiled track (20) or rail formed on the inside of the guide rail (4a, 4b) and guiding said at least one roller (13).

3. The loading floor in accordance with Claim 1 or 2, **characterised in that** the sliding elements (9a, 9b) form an integral component of the loading floor (1), and in particular are designed integrally with it.

4. The loading floor in accordance with one of Claims 1 to 3, **characterised in that** said at least one roller (13) bearing an axis (14) is always arranged in a receiving element (15) inserted into the through-hole (11).

5. The loading floor in accordance with one of the preceding claims, **characterised in that** each guide rail (4a, 4b) consists of two guide rail components (7a, 19a, 7b, 19b) connected with one another that can be folded over one another over by way of an integral hinge (24).

6. The loading floor in accordance with Claim 4 or 5, **characterised in that** said at least [one] roller (13), the axis (14) and the receiving element (15) and/or the guide rails (4a, 4b) are formed as an injection-moulded component.

7. The loading floor in accordance with one of the preceding claims, **characterised in that** the respective sliding element (9a, 9b) has a first longitudinal section (10) comprising said at least one roller (13), preferably three rollers (13) and a second longitudinal section (16) resulting in a projection (17) or a stop edge, with a width that is narrower in comparison to that of the first longitudinal section (10), which, in the fully extended position of the loading floor (1), strikes against a stopper disposed on the inside of each guide rail (4a, 4b), in particular a bulkhead of the guide rails (4a, 4b).

8. The loading floor in accordance with one of the preceding claims, **characterised in that**, in every sliding element (9a, 9b), in particular always in the first longitudinal section (10) possessing said at least one roller (13), a recess (26) is disposed, into which a locking unit (18) engaging in its locking position with a locking recess or a locking area (28) of the adjoining guide rail (4a, 4b) is inserted.

9. The loading floor in accordance with Claim 8, **characterised in that** the locking unit (18) comprises a spring-loaded locking pin (27) or a locking section, which moves, in the locking position of the locking unit (18), driven by the spring tension, in its locking position engaging with the allocated locking recess or locking area (28) of the adjacent guide rails (4a, 4b), from which it can be pulled out from its locking position, against the force of a spring (30) using a manually-operated Bowden-type cable (6, 25) that transmits force and grasps the locking pin (27) or locking section.

10. The loading floor in accordance with one of the preceding claims, **characterised in that** the guide rails (4a, 4b) each have a spring-loaded clamping element (23) at their end face.

11. The loading floor in accordance with one of the preceding claims, **characterised in that** the loading floor (1) is formed so that it can be laid with the guide rails (4a, 4b) on interior panel elements (31, 32) placed in the motor vehicle laterally, as well as in a longitudinal direction of the motor vehicle along the length of the boot (38) and located opposite one another crosswise to the vehicle, which each have support areas (33, 34) at a distance from one another, in the respective longitudinal direction of the vehicle, for a front and a rear end region of a guide rail (4a, 4b) of the loading floor, and the dimensions of which are adapted in such a way that they are, firstly, adapted to the distance between the interior panel elements (31, 32) from one another, and, secondly, to the respective distance between the support areas (33, 34) of an interior panel element (31, 32) from one another, in such a way that the guide rails (4a, 4b) are fixed to the support areas (33, 34), in particular clamped, held between the latter, and the sliding elements (9a, 9b) can be moved when the loading floor (1) is pulled out in the guide rails (4a, 4b) in the longitudinal direction of the vehicle and relative to the latter.

12. The loading floor in accordance with Claim 10, **characterised in that** the support areas (33, 34) of the interior panel elements (31, 32) form a component of the rocker arms (35) and/or support areas (36) making it possible to adjust the height of the loading floor (1) with the guide rails (4a, 4b) in its dimensions in such a way that the guide rails (4a, 4b) are fixed to the rocker planes (35) and/or support areas (36), in particular clamped and held between the latter, and the sliding elements (9a, 9b) can be moved when the loading floor (1) is pulled out along the guide rails (4a, 4b) in the longitudinal direction of the vehicle and relative to the latter.

13. A loading floor in accordance with Claim 10 or 11, **characterised in that** the loading floor (1) with the guide rails (4a, 4b) is adjusted in its dimensions to the support areas (33, 34) and/or the rocker planes (35) and/or the supporting surfaces (36), in such a way that it can be laid on top of the latter and supported there, as well as lifted up and removed from them when the loading floor (1) is swivelled.

14. A system for arranging a loading floor (1) that is adjustable in height and can be pulled out in the boot (38) of a motor vehicle, in particular a passenger vehicle,
which comprises interior panel elements (31, 32) placed in the motor vehicle laterally, as well as in a longitudinal direction of the motor vehicle along the length of the boot (38) and located opposite one another crosswise to the vehicle, which each have support areas (33, 34) at a distance from one another, in the respective longitudinal direction of the vehicle, for a front and a rear end region of a guide rail (4a, 4b) of the loading floor (1),
and which comprises a loading floor (1) which has two guide rails designed as clamps (4a, 4b), which each abut one out of two longitudinal sides located opposite one another in the transverse direction of the loading floor (1) with an open guide rail end,
wherein the guide rails (4a, 4b) each encompass a sliding element (9a, 9b) that is formed at the respective longitudinal side of the loading floor (1) in a clamp-like manner, and can be moved within the respective guide rail (4a, 4b) by means of at least one roller (13), as well as being movably supported together with the loading floor (1), relative to the guide rail allocated (4a, 4b),
wherein the sliding elements (9a, 9b) each have at least one through-hole (11), in to which said at least one roller (13) is rotatably inserted with an axis (14) and in which it is held, and wherein the loading floor (1) with the guide rails (4a, 4b) is adapted, in its dimensions, firstly, to the distance between the interior panel elements (31, 32) from one another, and, secondly, to the respective distance between the support areas (33, 34) of an interior panel element (31, 32) from one another, in such a way that the guide rails (4a, 4b) are fixed to the support areas (33, 34), in particular clamped, held between the latter, and the sliding elements (9a, 9b) can be moved when the loading floor (1) is pulled out within the guide rails (4a, 4b) in the longitudinal direction of the vehicle and relative to the latter.

15. The system in accordance with Claim 14, **characterised in that** said at least one roller (13) is guided by at least one profiled track (20) or rail formed on the inside of the guide rail (4a, 4b) and guiding said at least one roller (13).

16. The system in accordance with Claim 14 or 15, **characterised in that** the support areas (33, 34) form a component of the rocker arms (35) and/or support areas (36) making it possible to adjust the height of the loading floor (1) with the guide rails (4a, 4b) in its dimensions in such a way that the guide rails (4a, 4b) are fixed to the rocker planes (35) and/or support areas (36), in particular clamped and held between the latter, and the sliding elements (9a, 9b) can be moved when the loading floor (1) is pulled out along the guide rails (4a, 4b) in the longitudinal direction of the vehicle and relative to the latter.

17. A system in accordance with one of Claims 14 or 16, **characterised in that** the loading floor (1) with the guide rails (4a, 4b) is adjusted in its dimensions to the support areas (33, 34) and/or the rocker planes (35) and/or the supporting surfaces (36), in such a way that it can be laid on top of the latter and supported there, as well as lifted up and removed from them when the loading floor (1) is swivelled.

18. A system in accordance with one of Claims 14 to 17, **characterised in that** it comprises an extendable loading floor (1) in accordance with one of Claims 2 to 13.

## Revendications

1. Fond de chargement extensible (1) d'un véhicule à moteur, plus particulièrement d'un véhicule personnel,
avec deux rails de guidage (4a, 4b) conçus comme des pinces, qui s'appuient chacun, avec un côté ouvert de rail de guidage, contre une parmi deux côtés longitudinaux du fond de chargement (1) qui se font face dans la direction transversale du fond de chargement (1), les rails de guidage (4a, 4b) entourant chacun, comme des pinces, un élément de chariot (9a, 9b) qui se trouve au niveau du côté longitudinal correspondant du fond de chargement (1) et qui est mobile de manière guidée à l'intérieur du rail de guidage (4a, 4b) correspondant au moyen d'au moins un rouleau (13) et est logé de manière mobile conjointement avec le fond de chargement (1) par rapport au rail de guidage (4a, 4b) correspondant,
les éléments de chariot (9a, 9b) comprenant chacun au moins un passage (11) dans lequel l'au moins un rouleau (13) est inséré de manière rotative avec un axe (14) et maintenu.

2. Fond de chargement selon la revendication 1, **caractérisé en ce que** l'au moins un rouleau (13) est maintenu par au moins une piste de roulement (20) ou un rail de roulement profilé disposé à l'intérieur du rail de guidage (4a, 4b) et guidant l'au moins un rouleau (13).

3. Fond de chargement selon la revendication 1 ou 2, **caractérisé en ce que** les éléments de chariot (9a, 9b) font partie intégrante du fond de chargement (1), plus particulièrement forment une seule pièce avec celui-ci.

4. Fond de chargement selon l'une des revendications 1 à 3, **caractérisé en ce que** l'au moins un rouleau (13) avec son axe (14) est disposé dans un élément de logement (15) inséré dans le passage (11).

5. Fond de chargement selon l'une des revendications précédentes, **caractérisé en ce que** chaque rail de guidage (4a, 4b) est constitué de deux parties de rail de guidage (7a, 19a ; 7b, 19b) reliées entre elles de façon à être rabattables l'une sur l'autre par l'intermédiaire d'une charnière à film (24).

6. Fond de chargement selon la revendication 4 ou 5, **caractérisé en ce que** l'au moins un rouleau (13), l'axe (14) et l'élément de logement (15) et/ou les rails de guidage (4a, 4b) sont conçus comme des pièces moulées par injection.

7. Fond de chargement selon l'une des revendications précédentes, **caractérisé en ce que** les différents éléments de chariot (9a, 9b) comprennent une première portion longitudinale (10) comprenant l'au moins un rouleau (13), de préférence trois rouleaux (13) et une deuxième portion longitudinale (16) reliée à celle-ci en formant un rehaussement (17) ou une arête de butée, avec une largeur inférieure à celle de la première portion longitudinale (10), qui s'appuie, dans la position d'extension complète du fond de chargement (1), contre une butée disposée à l'intérieur de chaque rail de guidage (4a, 4b), plus particulièrement une paroi transversale du rail de guidage (4a, 4b).

8. Fond de chargement selon l'une des revendications précédentes, **caractérisé en ce que**, dans chaque élément de chariot (9a, 9b), plus particulièrement dans la première portion longitudinale (10) comprenant l'au moins un rouleau (13), est réalisé un évidement (26) dans lequel est insérée une unité de verrouillage (18) s'emboîtant, dans sa position de verrouillage, dans un évidement de verrouillage ou une zone de verrouillage (28) du rail de guidage (4a, 4b) adjacent.

9. Fond de chargement selon la revendication 8, **caractérisé en ce que** l'unité de verrouillage (18) comprend une tige de verrouillage (27) ou une portion de verrouillage actionnée par la force d'un ressort qui se déplace, dans la position de verrouillage de l'unité de verrouillage (18), à l'aide de la force d'un ressort, vers sa position de verrouillage qui saisit l'évidement de verrouillage correspondant ou la zone de verrouillage (28) correspondante du rail de guidage (4a, 4b) adjacent, à partir de laquelle il peut être retiré, au moyen d'un câble Bowden (6, 25) s'emboîtant au niveau de la tige de verrouillage (27) ou de la portion de verrouillage avec une transmission des forces, et actionnable à la main, à l'encontre de la force d'un ressort (30), hors de sa position de verrouillage.

10. Fond de chargement selon l'une des revendications précédentes, **caractérisé en ce que** les rails de guidage (4a, 4b) comprennent chacun, du côté de la tête, un élément de serrage (23) actionné par la force d'un ressort.

11. Fond de chargement selon l'une des revendications précédentes, **caractérisé en ce que** le fond de chargement (1) avec les rails de guidage (4a, 4b) est conçu de façon à pouvoir être posé sur des éléments de carénage internes (31, 32) disposés latéralement dans le véhicule et orientés dans la direction longitudinale du véhicule le long de l'espace de chargement (38) et se faisant face dans la direction transversale du véhicule, qui comprennent chacun des zones d'appui (33, 34), distantes entre eux dans la direction longitudinale du véhicule, pour une zone d'extrémité avant et arrière d'un rail de guidage (4a, 4b) du fond de chargement (1), et est adapté, en ce qui concerne ses dimensions, d'une part au niveau de la distance entre les éléments de carénage interne (31, 32) et d'autre part au niveau de la distance entre les zones d'appui (33, 34) d'un élément de carénage interne (31, 32), de façon à ce que les rails de guidage (4a, 4b) soient maintenus de manière posée et fixe, plus particulièrement avec un serrage, sur les zones d'appui (33, 34) entre celles-ci et les éléments de chariot (9a, 9b) sont mobiles lors d'un mouvement d'extension du fond de chargement (1) dans la direction longitudinale dans les rails de guidage (4a, 4b) et relativement par rapport à ceux-ci.

12. Fond de chargement selon la revendication 10, **caractérisé en ce que** les zones d'appui (33, 34) des éléments de carénage internes (31, 32) font partie intégrante de pistes de coulissement (35) et/ou de surfaces d'appui (36) permettant un réglage en hauteur du fond de chargement (1) et le fond de chargement (1) avec les rails de guidage (4a, 4b) est adapté, en ce qui concerne ses dimensions de façon à ce que les rails de guidage (4a, 4b) soient maintenus de manière posée et fixe, plus particulièrement avec un serrage, sur les surfaces de coulissement (35) et/ou sur les surfaces d'appui (36), entre celles-ci et les éléments de chariot (9a, 9b) sont mobiles lors d'un mouvement d'extension du fond de chargement (1) dans la direction longitudinale dans les rails de guidage (4a, 4b) et relativement à ceux-ci.

13. Fond de chargement selon la revendication 10 ou 11, **caractérisé en ce que** le fond de chargement (1) avec les rails de guidage (4a, 4b) est adapté, en ce qui concerne ses dimensions, aux zones d'appui (33, 34) et/ou aux surfaces de coulissement (35) et/ou aux surfaces d'appui (36) de façon à ce qu'il puisse être posé et logé sur celles-ci et à ce qu'il puisse être soulevé et retiré de celles-ci en pivotant le fond de chargement (1).

14. Système pour la disposition réglable en hauteur et extensible d'un fond de chargement (1) dans l'espace de chargement (38) d'un véhicule, plus particulièrement un véhicule personnel,
qui comprend des éléments de carénage internes (31, 32) disposés latéralement dans le véhicule et orientés dans la direction longitudinale du véhicule le long de l'espace de chargement (38) et se faisant face dans la direction transversale du véhicule, qui comprennent des zones d'appui (33, 34) distantes entre elles dans la direction longitudinale du véhicule pour une zone d'extrémité avant et arrière d'un rail de guidage (4a, 4b) du fond de chargement (1),
et qui comprend un fond de chargement (1) qui comprend deux rails de guidage (4a, 4b) conçus comme des pinces, qui s'appuient chacun avec un côté ouvert de rail de guidage, contre un parmi deux côtés longitudinaux du fond de chargement (1) qui se font face dans la direction transversale du fond de chargement (1),
les rails de guidage (4a, 4b) entourant chacun, à la manière d'une pince, un élément de chariot (9a, 9b), qui est disposé sur le côté longitudinal correspondant du fond de chargement (1) et qui est mobile de manière guidée à l'intérieur du rail de guidage correspondant (4a, 4b) au moyen d'au moins un rouleau (13) et logé de manière mobile conjointement avec le fond de chargement (1) par rapport au rail de guidage (4a, 4b) correspondant,
les éléments de chariot (9a, 9b) comprenant chacun au moins un passage (11), dans lequel l'au moins un rouleau (13) avec un axe (14) est inséré de manière rotative et maintenu
et le fond de chargement (1) avec les rails de guidage (4a, 4b) étant adapté, en ce qui concerne ses dimensions, d'une part au niveau de la distance entre les éléments de carénage internes (31, 32) et d'autre part au niveau de la distance correspondante entre les zones d'appui (33, 34) d'un élément de carénage interne (31, 32), de façon à ce que les rails de guidage (4a, 4b) soient maintenus de manière posée et fixe, plus particulièrement avec un serrage, sur les zones d'appui (33, 34) entre celles-ci et les éléments de chariot (9a, 9b) sont mobiles lors d'un mouvement d'extension du fond de chargement (1) dans la direction longitudinale dans les rails de guidage (4a, 4b) et relativement à ceux-ci.

15. Système selon la revendication 14, **caractérisé en ce que** l'au moins un rouleau (13) est maintenu par au moins une piste de roulement (20) ou rail de roulement profilé disposé à l'intérieur du rail de guidage (4a, 4b) et comprenant au moins un rouleau (13).

16. Système selon la revendication 14 ou 15, **caractérisé en ce que** les zones d'appui (33, 34) font partie intégrante de pistes de coulissement (35) et/ou de surfaces d'appui (36) permettant un réglage en hauteur du fond de chargement (1) et le fond de chargement (1) avec les rails de guidage (4a, 4b) est maintenu sur les surfaces de coulissement (35) et/ou les surfaces d'appui (36) de manière posée et fixe, plus particulièrement avec un serrage, entre celles-ci et les éléments de chariot (9a, 9b) sont mobiles lors d'un mouvement d'extension du fond de chargement (1) dans la direction longitudinale dans les rails de guidage (4a, 4b) et relativement à ceux-ci.

17. Système selon l'une des revendications 14 ou 16, **caractérisé en ce que** le fond de chargement (1) avec les rails de guidage (4a, 4b) est adapté, en ce qui concerne ses dimensions, aux zones d'appui (33, 34) et/ou aux surfaces de coulissement (35) et/ou aux surfaces d'appui (36) de façon à ce qu'il puisse être posé et logé sur celles-ci et à ce qu'il puisse être soulevé et retiré de celles-ci par pivotement du fond de chargement (1).

18. Système selon l'une des revendications 14 à 17, **caractérisé en ce qu'**il comprend un fond de chargement (1) extensible selon l'une des revendications 2 à 13.
